# EUROPÄISCHE PATENTSCHRIFT

(11) **EP 2 484 542 B1**
(45) Veröffentlichungstag und Bekanntmachung des Hinweises auf die Patenterteilung: **20.05.2015**
(21) Anmeldenummer: 12150872.5
(22) Anmeldetag: 12.01.2012
(51) Int. Cl.: B60D 1/155, B60D 1/167, B60D 1/62

(54) **System zum automatischen einstellen eines Spaltraumes zwischen einem Motorwagen und einem daran angekuppelten Aanhänger**
System for automatic adjusting of a gap between a motorcar and a trailer coupled to it
Système de réglage automatique d'un espace de séparation entre un chariot motorisé et une remorque y étant accouplée

(30) Priorität: 08.02.2011 DE 102011003791
(43) Veröffentlichungstag der Anmeldung: 08.08.2012
(73) Patentinhaber: Jost-Werke GmbH, 63263 Neu-Isenburg (DE)
(72) Erfinder: Algüera Gallego, José Manuel, 63739 Aschaffenburg (DE); Richter, Martin, 60389 Frankfurt am Main (DE)
(74) Vertreter: Mehler Achler

(56) Entgegenhaltungen:
- EP-A1- 0 264 321
- DE-A1- 3 728 477
- FR-A1- 2 646 812
- FR-A1- 2 692 202

## Beschreibung

Die Erfindung betrifft ein System zum automatischen Einstellen eines Spaltraumes zwischen einem Motorwagen und einem daran angekuppelten Anhänger, umfassend eine längenverstellbare, insbesondere teleskopierbare, Deichsel mit einem Zugrohr und einem endseitig daran angeordneten Zugauge, wobei das Zugauge gegenüber dem Zugrohr mittels eines Aktuators in der Fahrzeuglängsachse über einen vorgegebenen Verfahrweg verfahrbar ist, sowie eine Steuerungseinheit.

Der Motorwagen und der Anhänger bilden in zusammen gekuppeltem Zustand einen Last- oder Gliederzug, wobei sowohl der Motorwagen als auch der Anhänger zur Maximierung ihres Transportvolumens mit einem kastenförmigen, hoch aufbauenden Laderaum ausgebildet sind. Insbesondere bei schneller Geradeausfahrt entstehen um den Spaltraum zwischen Motorwagen und Anhänger erhebliche Verwirbelungen und Turbulenzen, die sich negativ auf den Kraftstoffverbrauch und die Schadstoffemissionen auswirken. Ein Verkleinern des Spaltraumes ist jedoch nur bei Geradeausfahrt des Gliederzuges möglich, da bei Kurvenfahrten die Gefahr besteht, dass der Anhänger mit dem Motorwagen kollidiert. Demzufolge ist es nach einem Verkleinern des Spaltraumes während des Fahrbetriebes unbedingt notwendig, im Falle einer Panikbremsung oder eines Ausweichmanövers wieder einen ausreichend großen Spaltraum herzustellen, wobei unter dem Begriff "automatisch" ein Einstellen des Spaltraumes systemimmanent, das heißt ohne Eingriff des Menschen verstanden wird.

In der Vergangenheit wurden bereits Bestrebungen unternommen, den Spaltraum bei Geradeausfahrt des Gliederzuges zu verringern und bei Kurvenfahrt zu vergrößern, um ein Anstoßen der sich gegenüberstehenden Ecken des Laderaums von Motorwagen und Anhänger zu verhindern. Einen gattungsgemäßen Stand der Technik bildet die DE 33 33 231 A1 mit einer mittels eines hydraulischen Nehmerzylinders verstellbaren Deichsel, wobei der Nehmerzylinder aus einem unterhalb des Drehkranzes angeordneten Geberzylinder gespeist wird. Sobald die Vorderachse des Anhängers einlenkt, wird der Kolben des Geberzylinders ein- oder ausgeschoben und drückt Hydraulikflüssigkeit aus dem Geberzylinder in den Nehmerzylinder, der wiederum das Zugauge in axialer Richtung der Deichsel verfährt. Der wesentliche Nachteil dieser bekannten Deichsel liegt darin, dass diese lediglich bei Anhängern mit gelenkter Vorderachse funktioniert und sich nicht an Anhängern mit starrer Deichsel installieren lässt. Ein weiterer Nachteil liegt in der ausschließlich winkelabhängigen Steuerung der längenverstellbaren Deichsel ohne Berücksichtigung der Fahrgeschwindigkeit des Gliederzuges. Darüber hinaus funktioniert diese bekannte Art der Zwangssteuerung in der Regel gut, solange sich die geometrischen Verhältnisse von Motorwagen und Anhänger nicht ändern, das heißt, der Anhänger immer von demselben Motorwagen gezogen wird. Wenn jedoch der Anhänger von verschiedenen Motorwagen mit einer voneinander abweichender Kontur des Laderaumes oder Chassis gezogen wird, besteht ein erhöhtes Risiko einer Kollision des Anhängers mit dem Motorwagen beim seitlichen Schwenken während einer Kurvenfahrt aufgrund eines zu gering eingestellten Spaltraum zwischen Motorwagen und Anhänger.

Eine ähnliche technische Lösung eines so genannten Kurzkuppelsystems, die auch das Ziehen von Anhängern mit starrer Deichsel ermöglicht, schlägt die DE 41 36 334 C1 vor, wobei dort jedoch der am Anhänger befindliche Nehmerzylinder aus einem am Motorwagen angeordneten Geberzylinder gespeist wird, der wiederum über ein mechanisches Getriebe in Abhängigkeit des Knickwinkels zwischen dem Zugfahrzeug und dem Anhänger zwangsbetätigt ist.

Aus der DE 195 07 034 A1 ist bekannt geworden, bei einem Lastkraftwagen mit Anhänger Beschädigungen an der Zuggabel oder Anbauten des Zugfahrzeugs während der Rückwärtsfahrt zu vermeiden. Hierfür soll eine Anhängerkupplung mit einem schwenkbar oder federnd am Querträger des Chassis gelagerten Kupplungsmaul vorgesehen werden, welche mit der Zuggabel bedingt mitverschwenkt, wenn das Fahrzeug entsprechend eingelenkt wird. Zur Erfassung der Bewegung des Kupplungsmauls sind beidseitig der Maulöffnung des Kupplungsmauls Sensoren angeordnet. Die Sensoren lösen kurz vor einem Anschlagen der Zuggabel an das Chassis oder an sonstige Anbauten einen Motorstop aus, so dass der Fahrer des Lastkraftwagens zunächst einmal andere Maßnahmen einleiten muss, um sein Fahrzeug dann erneut zu betreiben. Die bekannte Lastkraftwagen-Zuggabel-Sicherung funktioniert lediglich bei langsamem Rangieren während der Rückwärtsfahrt und verursacht bei Überschreiten einer vorgegebenen Knickstellung zwischen Motorwagen und Anhänger ein Abschalten des Motors. Dieses ist bei schneller Autobahnfahrt ein massives Sicherheitsrisiko und daher nicht akzeptabel.

Ein System, welches den Oberbegriff von Anspruch 1 zeigt, ist aus der Patentschrift FR 2 692 202 A1 bekannt.

Der Erfindung lag daher die Aufgabe zugrunde, ein System bereitzustellen, mit dem im Fahrbetrieb der Spaltraum zwischen Motorwagen und Anhänger automatisiert und geschwindigkeitsabhängig sowohl bei gelenkten als ungelenkten Anhängern variiert werden kann.

Die Aufgabe wird erfindungsgemäß mit einem System gelöst, bei dem die Steuerungseinheit ein elektronisches Steuergerät ist, welches zum Verarbeiten eines Geschwindigkeitssignals an einen Geschwindigkeitsgeber angeschlossen und mit dem Aktuator verbunden ist. Das Steuergerät erhält demzufolge als Eingangsgröße einen Messwert der aktuell gefahrenen Geschwindigkeit und gibt als Ausgangsgröße ein entsprechendes Signal an den Aktuator. Der Aktuator stellt daraufhin den Spaltraum zwischen dem Motorwagen und dem Anhänger in Abhängigkeit der Fahrgeschwindigkeit ein. Hierfür ist in dem Steuergerät eine Kennlinie hinterlegt, welche eine stetige funktionale Einstellung des Spaltraumes in Abhängigkeit der aktuellen Fahrgeschwindigkeit abbildet.

Grundsätzlich ist im niedrigen Geschwindigkeitsbereich ein großer Spaltraum von Vorteil, da sich die aerodynamischen Nachteile kaum auswirken und der Gliederzug in der Regel eine kurvenreiche Strecke befährt, die zwischen Motorwagen und Anhänger große Abwinklungen um eine vertikale Schwenkachse voraussetzt. Wird dagegen eine Autobahn befahren, nimmt die Fahrgeschwindigkeit und damit die aerodynamischen Auswirkungen eines großen Spaltraumes zu. Die mit hoher Geschwindigkeit zu befahrenen Kurvenradien sind in der Regel weit, so dass es nur zu geringen Relativbewegungen zwischen dem Motorwagen und dem Anhänger kommt und ein Anstoßen des Anhängers an das Chassis des Motorwagens nicht zu befürchten ist.

Gemäß einer ersten bevorzugten Ausführungsform ist der Geschwindigkeitsgeber ein mit dem Fahrzeuggetriebe zusammenwirkender Geschwindigkeitssensor. Diese Ausführungsform betrifft eine Modifikation des Motorwagens und liefert dem erfindungsgemäßen System unabhängig von dessen sonstiger elektronischer Konfiguration ein besonders exaktes und zeitnahes Signal.

Vorteilhafterweise kann der Geschwindigkeitsgeber auch ein mit einer Achse eines Anhängers zusammenwirkender Geschwindigkeitssensor sein. Diese Ausführungsform hat den Vorteil, dass alle Systemkomponenten auf dem Anhänger installiert sind, der Anhänger von unterschiedlichen Motorwagen aufgenommen werden kann und dennoch die erfindungsgemäßen Vorteile erzielt werden. Der Geschwindigkeitssensor kann alternativ auch als Radsensor arbeiten oder auf andere Art und Weise eine Drehbewegung pro Zeiteinheit in ein Geschwindigkeitssignal umsetzen.

Gemäß einer anderen Ausführungsform kann der Geschwindigkeitsgeber aus dem Anti-Blockier-System (ABS) des Anhängers gebildet sein. Das ABS-System generiert stets ein Geschwindigkeitssignal, so dass auf das Anbringen und Anschließen weiterer Sensoren verzichtet werden kann.

In Abhängigkeit der technischen Ausstattung des Motorwagens kann, sofern vorhanden, als Geschwindigkeitsgeber auch der CAN-Bus dienen, über den in der Regel auch ein Geschwindigkeitssignal abgreifbar ist.

Vorzugsweise ist das Zugauge gegenüber dem Zugrohr in vorbestimmten Positionen mechanisch verriegelbar. Hierdurch lässt sich in diskreten Abständen eine formschlüssige Verriegelung erzielen, welche den Aktuator entlastet. Die Verriegelung kann insbesondere in Form von einem oder mehreren radial ausgerichteten Verriegelungsmitteln realisiert werden, die an dem Zugrohr oder Zugauge angreifen und in entsprechende Rastöffnungen im jeweils anderen Bauteil eingreifen. Für ein Verstellen der Deichsel kann das Verriegelungsmittel über einen Servomotor zum Beispiel in Form eines Pneumatikzylinders aus dem Wirkeingriff mit der komplementären Rastöffnung gelöst werden, so dass eine Relativbewegung zwischen dem Zugauge und dem Zugrohr möglich ist. Nach dem Erreichen der geänderten Stellung werden die Verriegelungsmittel erneut gesetzt und fixieren das Zugauge und das Zugrohr formschlüssig. Da das Verfahren des Verriegelungsmittels in einer Notsituation zeitnah erfolgen muss, sollte der Servomotor ebenfalls von demselben elektronischen Steuergerät wie der Aktuator angesteuert werden. Eine manuelle Betätigung wäre aus Sicherheitsgründen zu langsam und daher nicht akzeptabel.

Günstigerweise ist an dem Zugauge und/oder dem Zugrohr ein Kraftmesselement appliziert, welches dem elektronischen Steuergerät ein lastabhängiges Signal bereitstellt. Dieses kann sinnvoll sein, da ein beladener Anhänger im Falle einer Panikbremsung oder eines schnellen Ausweichmanövers zu erheblichen Lastwechselreaktionen neigt. Diese zu erwartenden Lastwechselreaktionen können durch Berücksichtigung des lastabhängigen Signals für das Einstellen des automatischen Spaltraums von dem elektronischen Steuergerät berücksichtigt werden. Als Kraftmesselement kommen beispielsweise Dehnungsmessstreifen oder Piezoelektrische Sensoren in Frage.

Zweckmäßigerweise arbeitet der Aktuator hydraulisch, elektromechanisch oder pneumatisch. Bevorzugt ist die Verwendung eines hydraulischen Druckzylinders. Unter einem elektromechanischen Aktuator wird eine von einem Motor angetriebene Spindel verstanden, auf welcher eine gegen Mitdrehen gehaltene Spindelmutter abläuft.

An der verstellbaren Deichsel kann das Zugrohr als erster Rohrabschnitt ausgebildet sein und das Zugauge einen zweiten Rohrabschnitt umfassen, wobei sich beide Rohrabschnitte konzentrisch überlappen. Sofern ein elektromechanischer Antrieb verwendet wird, ist die Verwendung eines nicht kreisrunden Querschnitts bevorzugt, insbesondere eines Vierkant- oder Polygonprofils. Bei diesen Ausführungsformen ergibt sich aufgrund der Geometrie der Rohrabschnitte eine Sicherung gegen Mitdrehen der Spindelmutter. Eine Ausführung der Rohrabschnitte als zumindest teilweise geschlossenes Hohlprofil ermöglicht zudem, die Komponenten des erfindungsgemäßen Systems geschützt innerhalb eines Hohlprofils oder beider Hohlprofile unterzubringen. So kann vorzugsweise der Aktuator innerhalb eines oder beider Rohrabschnitte(s) angeordnet sein.

Dabei kann der Aktuator auch von einem an oder innerhalb eines oder beider Rohrabschnitte(s) angeordneten Aggregats angetrieben sein. Vorteilhafterweise ist auch das elektronische Steuergerät an oder innerhalb eines oder beider Rohrabschnitte(s) untergebracht.

Günstigerweise ist das elektronische Steuergerät zur Verarbeitung eines Fahrzustandsignals an mindestens einen weiteren Signalgeber angeschlossen. Hierdurch kann die in erster Linie geschwindigkeitsabhängige Einstellung des Spaltraumes bei Kurvenfahrten des Gliederzuges weiter präzisiert werden, wobei die nachfolgenden Ausführungsformen als zusätzlichen Parameter den tatsächlich vorliegenden Abstand des Motorwagens zu dem Anhänger berücksichtigen. Dieser Abstand zwischen Motorwagen und Anhänger kann entweder direkt über eine Abstandmessung oder indirekt über eine Winkelmessung ermittelt werden.

Sofern ein Abstandssensor zum Einsatz kommt, sensiert dieser eine Veränderung des Abstandes von dem Anhänger zu einem davor befindlichen Motorwagen. Dabei hat es sich als besonders günstig erwiesen, wenn der Abstandssensor an der Vorderseite des Anhängers angeordnet ist. Aus dieser Position kann besonders effektiv das mitunter kollidierende Chassis des Motorwagens messtechnisch erfasst werden. Darüber hinaus befinden sich auch die Sensoren zusammen mit den übrigen Systemkomponenten auf dem Anhänger und ermöglichen einen Betrieb des Systems unabhängig von der Ausstattung des Motorwagens. Alternativ ist auch eine Anbringung der Abstandssensoren an der Rückseite des Motorwagens beziehungsweise dessen Laderaums möglich.

Zweckmäßigerweise ist der Abstandssensor seitlich beabstandet zur Fahrzeuglängsachse des Anhängers angeordnet. Im Bereich der äußeren Fahrzeugecken wird unmittelbar der tatsächlich vorhandene Spaltraum erfasst, da diese Bereiche im Falle einer Kurvenfahrt des Gliederzuges auch als erstes mit dem Anhänger kollidieren.

Gemäß einer alternativen Ausführungsform kann der Signalgeber auch ein Winkelsensor sein, der seitens des Anhängers zum Beispiel im Bereich eines Drehkranzes angeordnet ist und eine Änderung dessen Drehwinkels erfasst. Vorteilhafterweise ist der Winkelsensor ein Lenkungssensor, der im Bereich eines Lenkrades, Lenkgestänges oder Lenkgetriebes anordbar ist und eine Änderung des Lenkungswinkels von Lenkrad, Lenkgestänge oder Teilen des Lenkgetriebes erfasst. Eventuelle Kurvenfahrten werden durch eine Lageänderung dieser Teile des Lenksystems ausgelöst, so dass ein besonders zeitnahes Signal erfasst werden kann, bevor der Gliederzug mit der eigentlichen Kurvenfahrt beginnt. Dieses wiederum ermöglicht ein rechtzeitiges Expandieren der Deichsel und minimiert das Kollisionsrisiko zwischen Motorwagen und Anhänger.

Als weitere alternative Ausführungsform bietet es sich an, den Winkelsensor als Lenkwinkelsensor vorzusehen, der im Bereich mindestens eines Vorderrades des Motorwagens anordbar ist und eine Änderung des Lenkwinkels dieses Vorderrades gegenüber der Stellung bei Geradeausfahrt erfasst.

In einer anderen alternativen Ausführungsform ist der Signalgeber das Bremssystem eines angekuppelten Motorwagens oder des Anhängers, welches im Falle einer starken Bremsung ein entsprechendes Bremssignal liefert. Dieses Bremssignal kann innerhalb des elektronischen Steuergerätes dazu genutzt werden, die Deichsel zu expandieren und einen größeren Spaltraum zwischen Motorwagen und Anhänger einzustellen, da eine Vollbremsung häufig auch mit einem nachfolgenden Ausweichmanöver verbunden ist.

Für den regulären Fahrbetrieb sind in dem elektronischen Steuergerät vorteilhafterweise Steuerprogramme hinterlegt, durch welche in Abhängigkeit von der Fahrgeschwindigkeit und des augenblicklichen von dem Signalgeber gemessenen Abstandes oder Winkels die Position des Zugauges gegenüber der Zugdeichsel bestimmt wird.

Für den Fall einer Panikbremsung des Gliederzuges mit einhergehenden Lastwechselreaktionen oder eines plötzlichen Ausweichmanövers kann das Steuergerät aus der Abstands- oder Winkeländerung pro Zeiteinheit einen Abstands- oder Winkelgradienten bestimmen und den Aktuator in Abhängigkeit eines in dem Steuergerät hinterlegten Abstands- oder Winkelgradienten in Betrieb nehmen, wodurch sich der Spaltraum zwischen dem Motorwagen und dem Anhänger vergrößert oder verkleinert.

Es hat sich als besonders positiv herausgestellt, wenn an der oder den Achse(n) des Motorwagens und/oder des Anhängers mindestens ein Lastsensor angeordnet sind, welche die Achslast misst und den Messwert dem elektronischen Steuergerät bereitstellt. Dieser Lastsensor kann ergänzend oder alternativ zu dem an der Deichsel angeordneten Kraftmesselement vorgesehen sein. Auch hierdurch soll ein beladener oder leerer Anhänger identifiziert werden und das zu erwartende Fahrverhalten beim Einstellen des Spaltraumes berücksichtigt werden.

Zum besseren Verständnis wird die Erfindung nachfolgend anhand von sieben Figuren näher erläutert. Es zeigen die
- **Fig. 1:**: eine Seitenansicht auf einen Gliederzug mit unterschiedlich eingestelltem Spaltraum;
- **Fig. 2:**: eine Seitenansicht auf eine teleskopierbare Deichsel gemäß einer ersten Ausführungsform;
- **Fig. 3:**: eine Seitenansicht auf eine teleskopierbare Deichsel gemäß einer zweiten Ausführungsform;
- **Fig. 4:**: eine schematische Draufsicht auf einen Gliederzug mit einem weiteren Signalgeber in Form eines Abstandssensors;
- **Fig. 5:**: eine schematische Draufsicht auf einen Gliederzug mit einem weiteren Signalgeber in Form eines Winkelsensors im Bereich des Drehkranzes;
- **Fig. 6:**: eine schematische Draufsicht auf einen Gliederzug mit einem weiteren Signalgeber in Form eines Lenkungssensors und
- **Fig. 7:**: eine schematische Draufsicht auf einen Gliederzug mit einem weiteren Signalgeber in Form eines Lenkwinkelsensors.

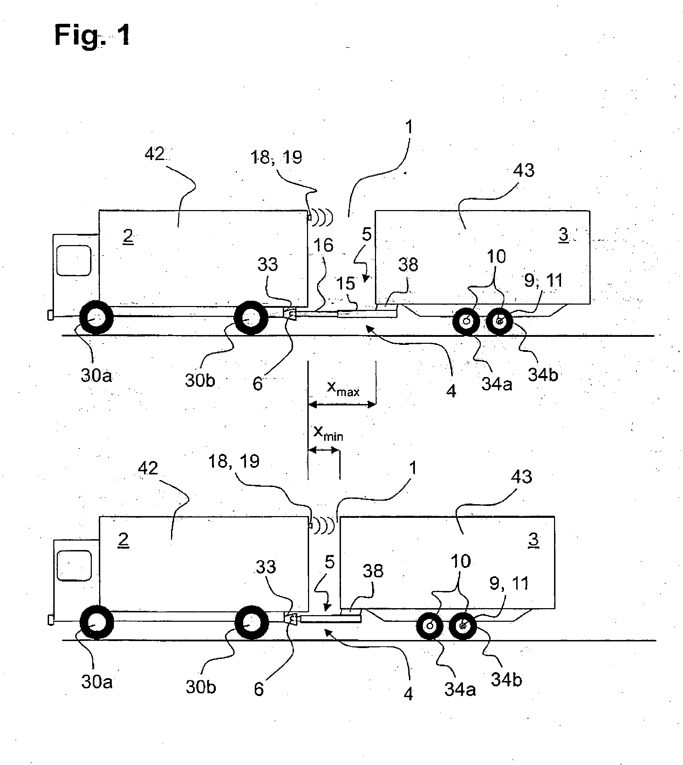

Die Figur 1 zeigt in einer Seitenansicht einen Gliederzug, der aus einem Motorwagen 2 und einem daran angekuppelten Anhänger 3 besteht. Sowohl der Motorwagen 2 als auch der Anhänger 3 weisen einen Laderaum 42, 43 auf, der für den Gütertransport genutzt wird. Üblicherweise verfügt der Motorwagen 2 über lenkbare Vorderräder 30a und motorisch angetriebene Hinterräder 30b.

Der Anhänger 3 weist eine so genannte Tandemachse mit in Fahrtrichtung nah beieinander angeordneten Vorderrädern 34a und Hinterrädern 34b auf. Beide Räderpaare 34a, 34b sind in Fahrtrichtung nicht lenkbar. Die mechanische Verbindung des Anhängers 3 mit dem Motorwagen 2 wird über eine Deichsel 4 realisiert, die ein Zugrohr 5 umfasst, an dessen vorderen Ende ein Zugauge 6 ausgeformt ist. Das Zugauge 6 wird vor Fahrtantritt in eine ortsfest am Motorwagen 2 angeordnete Bolzenkupplung 33 eingefahren und mit einem nicht weiter gezeigten Kupplungsbolzen formschlüssig gehalten. Die Deichsel 4 greift starr an dem Anhänger 3 an. Hierfür kann an der Deichsel 4 eine Montagekonsole 38 vorgesehen sein, die ihrerseits mit dem Anhängerchassis verschraubt ist.

Zwischen dem Motorwagen 2 und dem Anhänger 3 ist ein Spaltraum 1 vorhanden, der in der oberen Darstellung mit einem maximalen Abstand xₘₐₓ und in der unteren Darstellung mit einem minimalen Abstand xₘᵢₙ ausgebildet ist. Der große Abstand xₘₐₓ ermöglicht ein Rangieren und Befahren enger Kurvenradien, wobei sich die dem Anhänger 3 zugewandte Ecke des Laderaums 42 und die dem Motorwagen zugewandte Ecke des Laderaums 43 auf der Kurveninnenseite annähern können, ohne miteinander zu kollidieren und Beschädigungen hervorzurufen. Bei schneller Geradeausfahrt des Gliederzugs sind keine scharfen Kurvenfahrten möglich, so dass der Abstand x zwischen Motorwagen 2 und Anhänger 3 und somit der Spaltraum 1 verkürzt werden kann. Hierdurch resultiert eine verbesserte Überströmung des Spaltraumes 1 und eine Verringerung von Verwirbelungen, wodurch der Kraftstoffverbrauch und Schadstoffausstoß des Gliederzuges verringert wird.

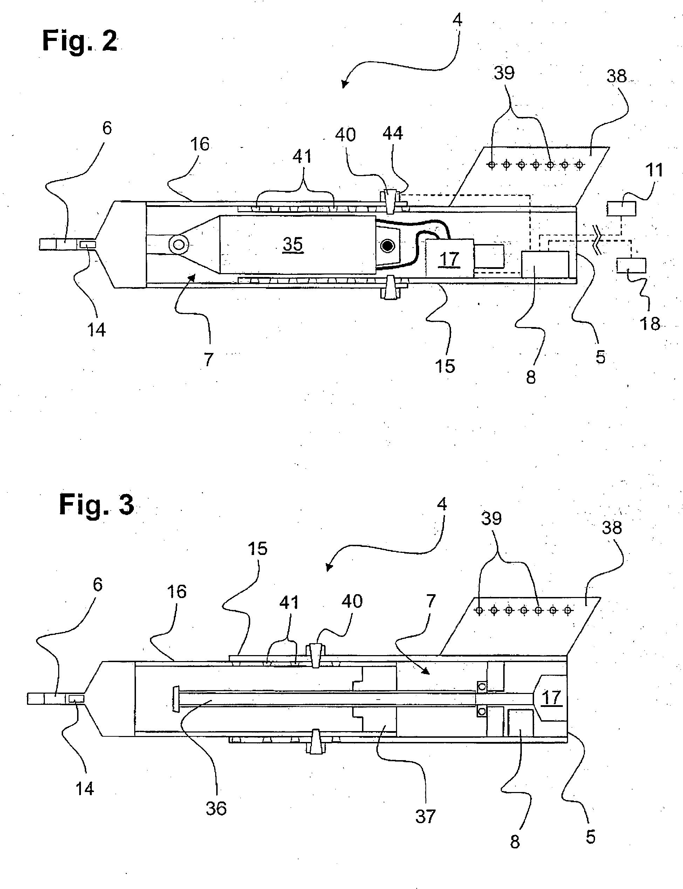

Das Erfassen der aktuell gefahrenen Geschwindigkeit erfolgt systemimmanent mittels eines auf dem Anhänger 3 befindlichen Geschwindigkeitsgebers 9. Der Geschwindigkeitsgeber 9 ist in der Ausführungsform gemäß der Fig. 1 als Geschwindigkeitssensor 11 an einer der Achsen 10 des Anhängers 3 angeordnet. Die tatsächlich gefahrene Geschwindigkeit des Anhängers 3 wird aus der Drehzahl der Achse 10 pro Zeiteinheit bestimmt und in einem elektronischen Steuergerät 8 (siehe Figuren 2 und 3) zu einem Signal für das Einstellen des Abstandes x verarbeitet.

Die Verringerung des Abstandes x erfolgt über ein Teleskopieren der Deichsel 4. Das ortsfest am Anhänger 3 angreifende Zugrohr 5 bildet einen ersten Rohrabschnitt 15, in welchem ein in Fahrzeuglängsrichtung verstellbarer, zweiter Rohrabschnitt 16 verschiebbar gehalten ist. Das Zugauge 6 ist integraler Bestandteil des zweiten Rohrabschnitts 16.

Der jeweilig eingestellte Abstand x wird über einen an der Rückseite des Motorwagens 2 angeordneten Abstandssensor 19 erfasst und bei der Einstellung des vorgesehenen Spaltraumes 1 berücksichtigt.

Die Fig. 2 zeigt in einer Seitenansicht eine erste Ausführungsform der teleskopierbaren Deichsel 4. Die Deichsel 4 umfasst einen durchmesserkleineren ersten Rohrabschnitt 15 mit einem vorzugsweise runden Querschnitt, welcher unlösbar mit der Montagekonsole 38 verbunden ist. Die Montagekonsole 38 wiederum weist in ihrem oberen Abschnitt mehrere Bohrungen 39 für eine Befestigung der Deichsel 4 an dem Anhänger 3 auf.

Auf den ersten Rohrabschnitt 15 ist koaxial ein durchmessergrößerer zweiter Rohrabschnitt 16 aufgeschoben und mittels eines Aktuators 7 in axialer Richtung verschiebbar gehalten. Der Aktuator 7 umfasst einen Druckmittelzylinder 35 und befindet sich zumindest teilweise innerhalb der Kontur des ersten Rohrabschnitts 15. Der Druckmittelzylinder 35 ist mit seinem ersten, dem Anhänger 3 zugewandten Ende ortsfest innerhalb des ersten Rohrabschnitts 15 gehalten. Das gegenüberliegende, zweite Ende des Druckmittelszylinders 35 befindet sich stets innerhalb der Kontur des zweiten Rohrabschnitts 16 und ist ortsfest an diesem befestigt. Der zweite Rohrabschnitt 16 trägt zudem das Zugauge 6 für eine lösbare Befestigung der Deichsel 4 an einer Bolzenkupplung 33 eines Motorwagens 2 (siehe Fig. 1). Durch ein Betätigen des Druckmittelzylinders 35 lässt sich der zweite Rohrabschnitt 16 mit dem daran ausgebildeten Zugauge 6 gegenüber dem ersten Rohrabschnitt 16 linear verfahren.

Der Druckmittelzylinder 35 ist dauerhaft mit einem Aggregat 17 in Form einer elektrisch betriebenen Pumpe verbunden, insbesondere einer Hydraulikpumpe. Die Inbetriebnahme des Aggregats 17 erfolgt automatisch durch ein elektronisches Steuergerät 8. Sowohl das Aggregat 17 als auch das elektronische Steuergerät 8 sind vorteilhafterweise innerhalb des ersten und/oder zweiten Rohrabschnitts 15, 16 untergebracht, wobei ein bezüglich des Anhängers 3 ortsfester Rohrabschnitt 15, 16 besonders geeignet ist - bei der vorliegenden Ausführungsform der erste Rohrabschnitt 15.

Das elektronische Steuergerät 8 ist über Datenleitungen mindestens mit dem Geschwindigkeitssensor 11 verbunden. Als weitere Eingangsgrößen können zudem Daten eines weiteren Signalgebers 18 und eines an der Deichsel 4 angeordneten Kraftmesselementes 14 von dem elektronischen Steuergerät 8 verarbeitet werden.

Um bei Erreichen eines quasistationären Betriebszustandes den Aktuator 7 zu entlasten, sind in der Umfangswand des beweglichen zweiten Rohrabschnitts 16 an gegenüberliegenden Seiten Verriegelungsmittel 40 angeordnet, die in abgesenkter Position formschlüssig in komplementäre Rastöffnungen 41 des ersten Rohrabschnittes 15 eingreifen. Eine Vielzahl in axialer Richtung zueinander versetzter Rastöffnungen 41 ermöglicht eine Verriegelung in diversen Positionen.

Während des Verstellens der Deichsel 4 schiebt der Aktuator 7 den zweiten Rohrabschnitt 16 gesteuert von dem elektronischen Steuergerät 8 in diskreten Abständen vor, so dass das Verriegelungsmittel 40 in die nächstgelegene Rastöffnung 41 abgesenkt werden kann. Das Anheben und Absenken der Verriegelungsmittel 40 erfolgt über Servomotoren 44, die vorzugsweise druckluftbetrieben sind. Die Servomotoren 44 sind ebenfalls unmittelbar an das elektronische Steuergerät 8 angeschlossen.

In der Fig. 3 ist eine alternative Ausführungsform der teleskopierbaren Deichsel 4 dargestellt, bei welcher als Aktuator 7 anstelle eines Druckmittelzylinders 35 ein elektromechanischer Antrieb mit einer über ein Aggregat 17 angetriebenen Spindel 36 und einer darauf ablaufenden Spindelmutter 37 zum Einsatz kommt. Dabei ist die Spindel 36 in ihrer axialen Ausrichtung ortsfest aber drehbar an dem ersten Rohrabschnitt 15 gelagert. Die Spindelmutter 36 ist drehfest an dem zweiten Rohrabschnitt 16 fixiert und schiebt diesen in Abhängigkeit des Drehsinns der Spindel 35 aus oder in den ersten Rohrabschnitt 15.

Gemäß der in Fig. 3 gezeigten Ausführungsform ist der ortsfest am Anhänger 3 angebrachte erste Rohrabschnitt 15 durchmessergroß und der zweite Rohrabschnitt 16 durchmesserklein ausgebildet, so dass der erste Rohrabschnitt 15 den zweiten Rohrabschnitt 16 zumindest teilweise koaxial aufnimmt. Ein Mitdrehen der Spindelmutter 37 beziehungsweise des zweiten Rohrabschnitts 16 gegenüber dem ersten Rohrabschnitt 15 kann insbesondere durch Verzicht eines kreisrunden Rohrquerschnitts erreicht werden. Besonders geeignet sind dagegen insbesondere recht- oder vieleckige oder elliptische Querschnitte. Sofern der zweite Rohrabschnitt 16 mit einem runden Querschnitt versehen sein soll, können auch axial verlaufende Schienen zum Abstützen der Rohrwandung gegen Mitdrehen eingesetzt werden.

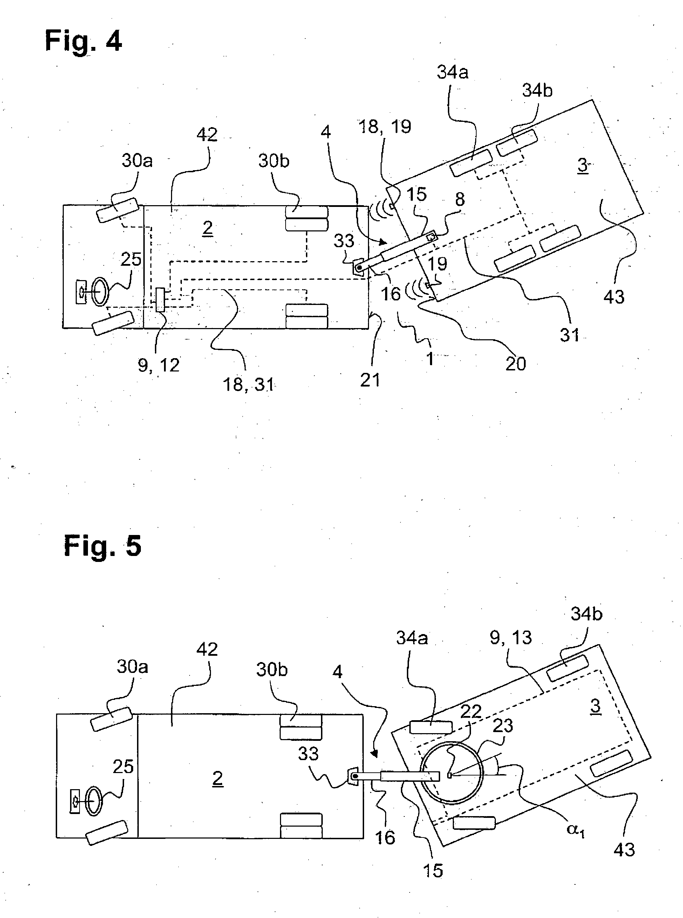

Die Figur 4 zeigt eine schematische Draufsicht auf einen aus Motorwagen 2 und Anhänger 3 gebildeten Gliederzug. Der Motorwagen 2 und der Anhänger 3 sind mit einem ABS 12 ausgestattet, in welchem jederzeit ein Geschwindigkeitssignal abgreifbar ist. Hierbei dient das ABS 12 als Geschwindigkeitsgeber 9 für das elektronische Steuergerät 8. Diese Ausführungsform ist insofern vorteilhaft, als dass seitens des Anhängers 3 auf einen eigenen Geschwindigkeitssensor 11 zur Erfassung der tatsächlich gefahrenen Geschwindigkeit verzichtet werden kann.

Als weitere Eingangsgröße erhält das elektronische Steuergerät 8 Daten von einem weiteren Signalgeber 18 in Form von zwei an der Vorderseite 20 des Anhängers 3 befindlichen Abstandsensoren 19. Die Abstandssensoren 19 sind jeweils in Fahrtrichtung des Anhängers 3 ausgerichtet und detektieren den kürzesten Abstand x (siehe Fig. 1) zu der Rückseite 21 des Motorwagens 2 auf gegenüberliegenden Seiten der Deichsel 4.

Sobald einer der Abstandssensoren 19 ein Unterschreiten eines vorgegebenen Mindestabstandes erkennt, setzt das elektronische Steuergerät 8 den Aktuator 17 (siehe Figuren 2 und 3) in Bewegung, welcher durch ein Auseinanderschieben des ersten und zweiten Rohrabschnittes 15, 16 die Länge der Deichsel 4 und dadurch das Spaltmaß 1 vergrößert. Um eine Kollision von Anhänger 3 und Motorwagen 2 zu verhindern, sollte ein Teleskopieren der Deichsel 4 bei einem Unterschreiten des Mindestabstandes unabhängig von der erfassten Fahrgeschwindigkeit des Gliederzuges erfolgen.

Das von dem ABS 12 geregelte Bremssystem 31 kann ebenfalls als weiterer Signalgeber 18 fungieren. Sobald von dem Fahrer das Bremssystem 31 betätigt wird, erhält auch das elektronische Steuergerät 8 ein entsprechendes Signal, was dazu genutzt werden kann, den Abstand x zwischen Motorwagen 2 und Anhänger 3 durch ein Teleskopieren der Deichsel 4 zu vergrößern. Das Bremssystem 31 ist bei Einleitung einer scharfen Bremsung zeitlich als erstes beteiligt, so dass dem elektronischen Steuergerät 8 sehr früh ein Signal zur Verfügung steht, den Abstand x unabhängig von der tatsächlich gemessenen Geschwindigkeit des Gliederzuges zu vergrößern.

Die Figur 5 zeigt eine alternative Ausführungsform des erfindungsgemäßen Systems, bei welcher der Mindestabstand zwischen Anhänger 3 und Motorwagen 2 indirekt durch eine Veränderung des Relativwinkels zwischen Anhänger 3 und Motorwagen 2 ermittelt wird.

Sofern es sich bei dem Anhänger um einen gelenkten Anhänger 3 handelt, weist dieser unterhalb seines Laderaumes 43 einen Drehkranz 23 auf. Eine Veränderung eines Drehwinkels α₁ des Drehkranzes 23 gegenüber der Geradeausfahrt wird von dem Winkelsensor 22 gemessen und an das innerhalb der Deichsel 4 befindliche elektronische Steuergerät 8 geleitet. Bei einem Überschreiten eines vorgegebenen maximalen Drehwinkels α₁ erfolgt durch das elektronische Steuergerät 8 ein Ausfahren der Deichsel 4. Dagegen kann bei einem Unterschreiten des maximalen Drehwinkels α₁ die Deichsel 4 verkürzt werden.

Als Geschwindigkeitsgeber 9 für das elektronische Steuergerät 8 dient bei der Ausführungsform gemäß Fig. 5 der CAN-Bus 13.

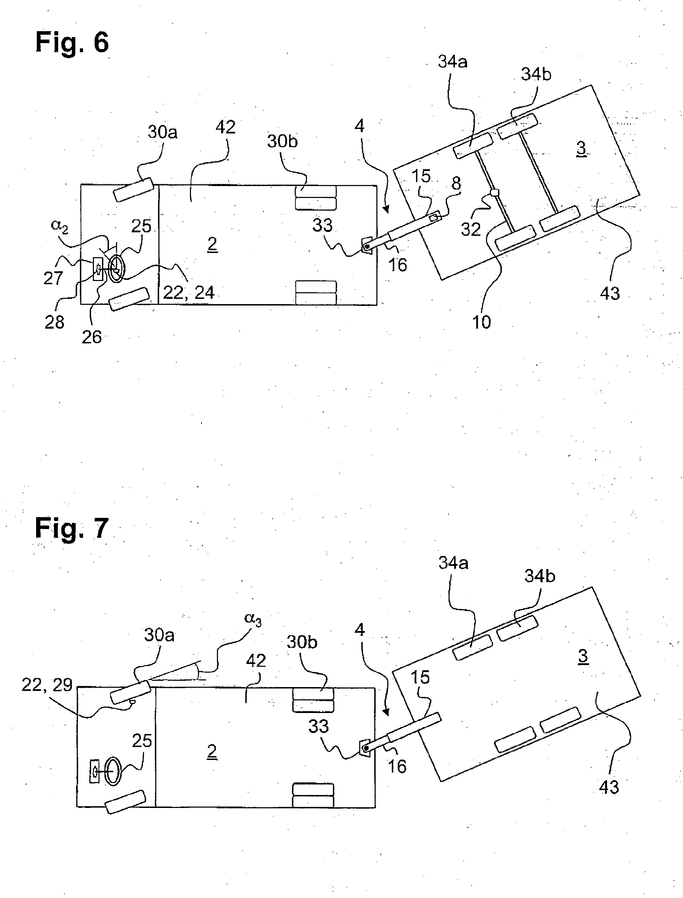

In der Figur 6 findet ebenfalls eine Winkelmessung mittels eines Winkelsensors 22 in Form eines Lenkungssensors 24 statt. In diesem Fall ist der Winkelsensor 22 aufgrund der starr am Anhänger 3 angreifenden Deichsel 4 allerdings nicht am Anhänger 3, sondern am Motorwagen 2 angeordnet und misst den Lenkungswinkel α₂. Der Lenkungswinkel α₂ kann insbesondere am Lenkrad 25, am Lenkgestänge 26 oder an Teilen 28 des Lenkgetriebes 27, insbesondere Getriebezahnrädern, abgenommen werden. Der dadurch ermittelte Messwert wird von dem Motorwagen 2 an das auf dem Anhänger 3 angeordnete elektronische Steuergerät 8 drahtlos oder über Datenkabel übertragen.

Ein an dem Anhänger 3 angeordneter Lastsensor 32 erfasst den Beladungszustand und stellt dem elektronischen Steuergerät 8 einen entsprechenden Messwert zur Verfügung. Bei voller Beladung kann das elektronische Steuergerät 8 im Rahmen vorgegebener Grenzwerte einen entsprechend größeren Abstand x einstellen und dadurch Lastwechselreaktionen des Anhängers 3 kompensieren. Der Lastsensor 32 ist vorzugsweise zwischen einer der Achsen 10 und dem Laderaum 43 angeordnet.

Die Figur 7 zeigt eine weitere alternative Ausführungsform der Erfindung, bei der unmittelbar der Lenkwinkel α₃ von einem im Bereich der lenkbaren Vorderräder 30a des Motorwagens 2 angeordneten Lenkwinkelsensor 29 erfasst wird. Unter dem Lenkwinkel α₃ wird die seitliche Stellung der Vorderräder 30a gegenüber der Geradeausfahrt verstanden. Der auf dem Motorwagen 2 ermittelte Messwert wird mittels Datenkabel oder kabellos auf den Anhänger 3 übertragen und dem elektronischen Steuergerät 8 bereitgestellt.

### Bezugszeichenliste

- 1: Spaltraum
- 2: Motorwagen
- 3: Anhänger
- 4: Deichsel
- 5: Zugrohr
- 6: Zugauge
- 7: Aktuator
- 8: elektronisches Steuergerät
- 9: Geschwindigkeitsgeber
- 10: Achse Anhänger
- 11: Geschwindigkeitssensor
- 12: ABS
- 13: CAN-Bus
- 14: Kraftmesselement
- 15: erster Rohrabschnitt
- 16: zweiter Rohrabschnitt
- 17: Aggregat
- 18: Signalgeber
- 19: Abstandssensor
- 20: Vorderseite Anhänger
- 21: Rückseite Motorwagen
- 22: Winkelsensor
- 23: Drehkranz
- 24: Lenkungssensor
- 25: Lenkrad
- 26: Lenkgestänge
- 27: Lenkgetriebe
- 28: Teil Lenkgetriebe
- 29: Lenkwinkelsensor
- 30a: Vorderrad Motorwagen
- 30b: Hinterrad Motorwagen
- 31: Bremssystem
- 32: Lastsensor
- 33: Bolzenkupplung
- 34a: Vorderrad Anhänger
- 34b: Hinterrad Anhänger
- 35: Druckmittelzylinder
- 36: Spindel
- 37: Spindelmutter
- 38: Montagekonsole
- 39: Bohrungen
- 40: Verriegelungsmittel
- 41: Rastöffnungen
- 42: Laderaum Motorwagen
- 43: Laderaum Anhänger
- 44: Servomotor

- x: Abstand Motorwagen/Anhänger
- α₁: Drehwinkel Drehkranz
- α₂: Lenkungswinkei
- α₃: Lenkwinkel

## Patentansprüche

1. System zum automatischen Einstellen eines Spaltraumes (1) zwischen einem Motorwagen (2) und einem daran angekuppetten Anhänger (3), umfassend eine längenverstellbare Deichsel (4) mit einem Zugrohr (5) und einem endseitig daran angeordneten Zugauge (6), wobei das Zugauge (6) gegenüber dem Zugrohr (5) mittels eines Aktuators (7) in der Fahrzeuglängsachse über einen vorgegebenen Verfahrweg verfahrbar ist, sowie eine Steuerungseinheit,
wobei die Steuerungseinheit ein elektronisches Steuergerät (8) ist, welches zum Verarbeiten eines Geschwindigkeitssignal an einen Geschwindigkeitsgeber (9) angeschlossen und mit dem Aktuator (7) verbunden ist,
**dadurch gekennzeichnet,**
**dass** in dem elektronischen Steuergerät (8) eine Kennlinie hinterlegt ist, die eine stetige funktionale Einstellung des Spaltraumes (1) in Abhängigkeit der aktuellen Fahrgeschwindigkeit abbildet.

2. System nach Anspruch 1, **dadurch gekennzeichnet, dass** der Geschwindigkeitsgeber ein mit dem Fahrzeuggetriebe zusammenwirkender Geschwindigkeitssensor ist.

3. System nach Anspruch 1, **dadurch gekennzeichnet, dass** der Geschwindigkeitsgeber (9) ein mit einer Achse (10) eines Anhängers (3) zusammenwirkender Geschwindigkeitssensor (11) ist.

4. System nach Anspruch 1, **dadurch gekennzeichnet, dass** der Geschwindigkeitsgeber (9) aus dem ABS (12) des Anhängers (3) oder Motorwagens (2) gebildet ist.

5. System nach Anspruch 1, **dadurch gekennzeichnet, dass** der Geschwindigkeitsgeber (9) aus dem CAN-Bus (13) gebildet ist.

6. System nach einem der Ansprüche 1 bis 5, **dadurch gekennzeichnet, dass** der Aktuator (7) hydraulisch, elektromechanisch oder pneumatisch arbeitet.

7. System nach einem der Ansprüche 1 bis 6, **dadurch gekennzeichnet, dass** das Zugrohr (5) als erster Rohrabschnitt (15) ausgebildet ist und das Zugauge (6) einen zweiten Rohrabschnitt (16) umfasst, wobei sich beide Rohrabschnitte (15, 16) überlappen.

8. System nach Anspruch 7, **dadurch gekennzeichnet, dass** der Aktuator (7) innerhalb eines oder beider Rohrabschnitte(s) (15, 16) angeordnet ist.

9. System nach Anspruch 7 oder 8, **dadurch gekennzeichnet, dass** der Aktuator (7) von einem Aggregat (17) angetrieben ist, wobei das Aggregat (17) an oder innerhalb eines oder beider Rohrabschnitte(s) (15, 16) angeordnet ist.

10. System nach einem der Ansprüche 7 bis 9, **dadurch gekennzeichnet, dass** das elektronische Steuergerät (8) an oder innerhalb eines oder beider Rohrabschnitte(s) (15, 16) angeordnet ist.

11. System nach einem der Ansprüche 1 bis 10, **dadurch gekennzeichnet, dass** das elektronische Steuergerät (8) zur Verarbeitung eines Fahrzustandssignals an mindestens einen weiteren Signalgeber (18) angeschlossen ist.

12. System nach Anspruch 11, **dadurch gekennzeichnet, dass** der Signalgeber (18) ein Abstandssensor (19) ist, der eine Veränderung des Abstandes (x) von dem Anhänger (3) zu einem davor befindlichen Motorwagen (2) sensiert.

13. System nach Anspruch 11, **dadurch gekennzeichnet, dass** der Signalgeber (18) ein Winkelsensor (22) ist.

14. System nach Anspruch 12, **dadurch gekennzeichnet, dass** der Winkelsensor (22) im Bereich eines Drehkranzes (23) anordbar ist und eine Änderung dessen Drehwinkels (α₁) erfasst.

15. System nach Anspruch 13, **dadurch gekennzeichnet, dass** der Winkelsensor (22) ein Lenkungssensor (24) ist, der im Bereich eines Lenkrades (25), Lenkgestänges (26) oder Lenkgetriebe (27) anordbar ist und eine Änderung des Lenkungswinkels (α₂) von Lenkrad (25), Lenkgestänge (26) oder Teilen (28) des Lenkgetriebes (27) erfasst.

16. System nach Anspruch 13, **dadurch gekennzeichnet, dass** der Winkelsensor (22) ein Lenkwihkelsensor (29) ist, der im Bereich mindestens eines Vorderrades (30a) des Motorwagens (2) anordbar ist und eine Änderung dessen Lenkwinkels (α₃) erfasst.

## Claims

1. System for the automatic adjustment of a gap (1) between a tractor vehicle (2) and an attached trailer (3), comprising a length-adjustable hitch (4) with a tension tube (5), at the end of which is arranged a tension lug (6), while the tension lug (6) can travel in the vehicle's lengthwise axis relative to the tension tube (5) by means of an actuator (7) along a predetermined travel path, as well as a control unit, wherein the control unit is an electronic controller (8), which is hooked up to a speed pickup (9) for the processing of a speed signal and connected to the actuator (7),
**characterized in that**,
there is stored in the electronic controller (8) a characteristic curve, which images a constant functional setting of the gap (1) as a function of the current speed of travel.

2. System according to claim 1, **characterized in that** the speed pickup is a speed sensor cooperating with the vehicle's transmission.

3. System according to claim 1, **characterized in that** the speed pickup (9) is a speed sensor (11) cooperating with an axle (10) of a trailer (3).

4. System according to claim 1, **characterized in that** the speed pickup (9) is formed from the ABS (12) of the trailer (3) or tractor vehicle (2).

5. System according to claim 1, **characterized in that** the speed pickup (9) is formed from the CAN bus (13).

6. System according to one of claims 1 to 5, **characterized in that** the actuator (7) has hydraulic, electromechanical or pneumatic operation.

7. System according to one of claims 1 to 6, **characterized in that** the tension tube (5) is configured as a first pipe segment (15) and the tension lug (6) comprises a second pipe segment (16), the two pipe segments (15, 16) being overlapping.

8. System according to claim 7, **characterized in that** the actuator (7) is arranged inside one or both pipe segments (15, 16).

9. System according to claim 7 or 8, **characterized in that** the actuator (7) is driven by a subassembly (17), the subassembly (17) being arranged on or inside one or both pipe segments (15, 16).

10. System according to one of claims 7 to 9, **characterized in that** the electronic controller (8) is arranged on or inside one or both pipe segments (15, 16).

11. System according to one of claims 1 to 10, **characterized in that** the electronic controller (8) is hooked up to at least one additional signal generator (18) for the processing of a vehicle condition signal.

12. System according to claim 11, **characterized in that** the signal generator (18) is a distance sensor (19), which senses a change in the distance (x) from the trailer (3) to a tractor vehicle (2) located in front of it.

13. System according to claim 11, **characterized in that** the signal generator (18) is an angle sensor (22).

14. System according to claim 12, **characterized in that** the angle sensor (22) is arranged in the region of a bearing rim (23) and it detects a change in its angle of rotation (α1).

15. System according to claim 13, **characterized in that** the angle sensor (22) is a steering sensor (24), which can be arranged in the area of a steering wheel (25), steering linkage (26) or steering transmission (27) and which detects a change in the steering angle (α2) of the steering wheel (25), steering linkage (26), or parts (28) of the steering transmission (27).

16. System according to claim 13, **characterized in that** the angle sensor (22) is a steering angle sensor (29), which can be arranged in the area of at least one front wheel (30a) of the tractor vehicle (2) and which detects a change in its steering angle (α3).

## Revendications

1. Système de réglage automatique d'un espace de séparation (1) entre un véhicule motorisé (2) et une remorque (3) attelée à ce dernier, comprenant un timon (4) de longueur réglable, pourvu d'un tube de traction (5) et d'un oeillet de traction (6) situé à une extrémité de celui-ci, ledit oeillet de traction (6) pouvant être déplacé d'une course préétablie par rapport audit tube de traction (5) suivant l'axe longitudinal du véhicule, au moyen d'un actionneur (7) ; ainsi qu'une unité de commande,
ladite unité de commande se présentant comme un appareil de commande électronique (8) connecté à un indicateur de vitesse (9), en vue du traitement d'un signal de vitesse, et relié audit actionneur (7),
**caractérisé par le fait**
**qu'**une courbe caractéristique, enregistrée dans l'appareil de commande électronique (8), reproduit un réglage fonctionnel permanent de l'espace de séparation (1) en fonction de la vitesse de déplacement effective.

2. Système selon la revendication 1, **caractérisé par le fait que** l'indicateur de vitesse est un capteur de vitesses coopérant avec la transmission du véhicule.

3. Système selon la revendication 1, **caractérisé par le fait que** l'indicateur de vitesse (9) est un capteur de vitesses (11) coopérant avec un essieu (10) d'une remorque (3).

4. Système selon la revendication 1, **caractérisé par le fait que** l'indicateur de vitesse (9) est constitué par le système antiblocage (12) de la remorque (3) ou du véhicule motorisé (2).

5. Système selon la revendication 1, **caractérisé par le fait que** l'indicateur de vitesse (9) est constitué par le bus CAN (13).

6. Système selon l'une des revendications 1 à 5, **caractérisé par le fait que** l'actionneur (7) fonctionne en mode hydraulique, électromécanique ou pneumatique.

7. Système selon l'une des revendications 1 à 6, **caractérisé par le fait que** le tube de traction (5) est réalisé sous la forme d'un premier tronçon tubulaire (15) et l'oeillet de traction (6) comprend un second tronçon tubulaire (16), les deux tronçons tubulaires (15, 16) se chevauchant.

8. Système selon la revendication 7, **caractérisé par le fait que** l'actionneur (7) est logé à l'intérieur de l'un des tronçons tubulaires (15, 16), ou des deux tronçons.

9. Système selon la revendication 7 ou 8, **caractérisé par le fait que** l'actionneur (7) est entraîné par un groupe (17), ledit groupe (17) étant disposé sur l'un des tronçons tubulaires (15, 16) ou sur les deux tronçons, voire à l'intérieur de l'un des tronçons, ou des deux tronçons.

10. Système selon l'une des revendications 7 à 9, **caractérisé par le fait que** l'appareil de commande électronique (8) est disposé sur l'un des tronçons tubulaires (15, 16) ou sur les deux tronçons, voire à l'intérieur de l'un des tronçons, ou des deux tronçons.

11. Système selon l'une des revendications 1 à 10, **caractérisé par le fait que** l'appareil de commande électronique (8) est connecté à au moins un générateur supplémentaire de signaux (18), en vue du traitement d'un signal de condition de déplacement.

12. Système selon la revendication 11, **caractérisé par le fait que** le générateur de signaux (18) est un capteur d'espacements (19), qui capte une variation de la distance (x) comprise entre la remorque (3) et un véhicule motorisé (2) précédant cette dernière.

13. Système selon la revendication 11, **caractérisé par le fait que** le générateur de signaux (18) est un capteur angulaire (22).

14. Système selon la revendication 12, **caractérisé par le fait que** le capteur angulaire (22) peut être placé dans la région d'une couronne rotative (23), et détecte une variation de l'angle de rotation (α₁) de cette dernière.

15. Système selon la revendication 13, **caractérisé par le fait que** le capteur angulaire (22) est un capteur de braquages (24) qui peut être placé dans la région d'un volant de direction (25), d'une tringlerie de direction (26) ou d'un mécanisme de direction (27), et qui détecte une variation de l'angle de braquage (α₂) dudit volant de direction (25), de ladite tringlerie de direction (26) ou de parties (28) dudit mécanisme de direction (27).

16. Système selon la revendication 13, **caractérisé par le fait que** le capteur angulaire (22) est un capteur (29) d'angles de braquage, qui peut être placé dans la région d'un moins une roue avant (30a) du véhicule motorisé (2) et qui détecte une variation de l'angle de braquage (α₃) de ladite roue.
